Europäisches Patentamt

European Patent Office

Office européen des brevets

(19)

(11) Publication number: **0 108 723**
**B1**

## (12) EUROPEAN PATENT SPECIFICATION

(45) Date of publication of patent specification: **09.12.87**

(51) Int. Cl.⁴: **B 29 D 30/52, B 29 D 30/58**

(21) Application number: **83830038.2**

(22) Date of filing: **18.02.83**

(54) **Expander device for arranging new tread rings on the carcass of a worn tire, in the retreading process thereof.**

(30) Priority: **05.11.82 IT 2410282**

(43) Date of publication of application:
**16.05.84 Bulletin 84/20**

(45) Publication of the grant of the patent:
**09.12.87 Bulletin 87/50**

(84) Designated Contracting States:
**AT BE CH DE FR GB LI LU NL SE**

(56) References cited:
**US-A-3 976 532**
**US-A-4 036 677**

(73) Proprietor: **MARANGONI RTS S.p.A.**
**Località Colle Baiocco**
**I-03013 Ferentino (Frosinone) (IT)**

(72) Inventor: **Castaldello, Giancarlo**
**Piazzale Cadorna, 6**
**I-37126 - Verona (IT)**

(74) Representative: **Cicogna, Franco**
**Ufficio Internazionale Brevetti Dott.Prof. Franco**
**Cicogna Via Visconti di Modrone, 14/A**
**I-20122 Milano (IT)**

EP 0 108 723 B1

## Description

The present invention relates to an expander device, for arranging new tread rings on the carcass of worn tires, in the retreading process thereof.

As it is known the tires having a worn tread but a not worn carcass may advantageously be retreaded, in particular if they are of large size, by applying on the perimetrical portion whereof a new premolded tread ring.

The mentioned retreading operation, which is preceded by substantially known operations, intended for suitably preparing the carcass surface to make it ready for coupling with the new tread ring, involves, as it will be well known to those skilled in the art, a preliminary spreading, in the radial direction, of the tread ring itself.

To that end, expander devices are presently used which are provided with a plurality of horizontally extending rods arranged according to even spacings along a circumferential line and effective to perpendicularly slide along the corresponding rays of said circumferential line.

Usually the above mentioned simultaneous sliding of the rods, in order to move apart from one another and approach one another said rods is achieved by means of an articulated parallelogram system which latter are generally operated by means of doubly acting hydraulic cylinders.

That construction, however, is a rather intricate one since it requires that the length and pivot points of the several parallelogram forming arms be precisely designed.

More specifically, the provision of a plurality of rods, obliquely located with respect to the pusher arms, requires moreover the use of large cross-section rods, thereby there is obtained a mechanical assembly of rather high size and weight.

Those constructional requirements, jointly to the frictions and reaction forces developed at the rod pivot points, involve the use of high powers in order to obtain the required extension movement of said rods.

For example, the US—A—3 976 532 Patent discloses an expander device for arranging new tread rings on worn tire carcasses, comprising a base bearing a horizontally extending shaft and effective to rotate about the axis of said shaft, at the end of the shaft there being keyed a bevel gear wheel meshing with a plurality of bevel sprockets, said bevel sprockets being arranged along a circumferential path and having perpendicular intersecting axes with respect to said bevel gear wheel axis, each of said bevel sprockets being fixed to the end part of a smooth portion of a cylindrical cross-section bar which also has a threaded portion engaging a threaded block having means to fix a rod, which block is connected to a structure coaxial to the shaft such that the block can move only in the direction of the common axis of the sprocket and the bar and cannot rotate, the structure bearing holes through which the smooth portion of said bar extends, said horizontal extending shaft being mounted on a support member and carrying, at the two ends thereof, a wheel and said bevel gear wheel, said wheel being rotated through a drive member by a wheel mounted on the driving shaft of an electric motor, said base being slidably mounted on a support with means to guide and means to move said base.

The structure disclosed by this US Patent is a rotating head one and, to this end, it provides for the use of a rather structurally complex driving system.

Accordingly, the task of the present invention is to overcome the thereinabove mentioned drawbacks, by providing such an expander device for arranging new tread rings on worn tire carcasses which is driven by a comparatively simple driving system and devoid of any articulated portions susceptible to wear at the pivot or articulation points.

Another object of the present invention is to provide such an expander device for arranging new tread rings on worn tire carcasses which comprises a reduced number of component parts, cooperating with one another, thereby providing a greatly efficient assembly for the user.

According to one aspect of the present invention the above task and objects, as well as yet other objects, which will become more apparent hereinafter, are achieved by an expander device for arranging new tread rings on worn tire carcasses which is driven by a comparatively simple driving system and which is devoid of any articulated portions susceptible to wear at the pivot or articulation points.

Another object of the present invention is to provide such an expander device for arranging new tread rings on worn tire carcasses which comprises a reduced number of component parts, cooperating with one another, thereby providing a greatly efficient assembly for the user.

According to one aspect of the present invention the above task and objects, will become more apparent hereinafter, are achieved by an expander device for arranging new tread rings on worn tire carcasses, comprising the features according to the characterizing part of the claim.

Further details and advantages of the expander device according to the present invention will become more apparent thereinafter from the following detailed description of a preferred embodiment thereof, being illustrated, by way of an indicative example, in the figures of the accompanying drawings, where:

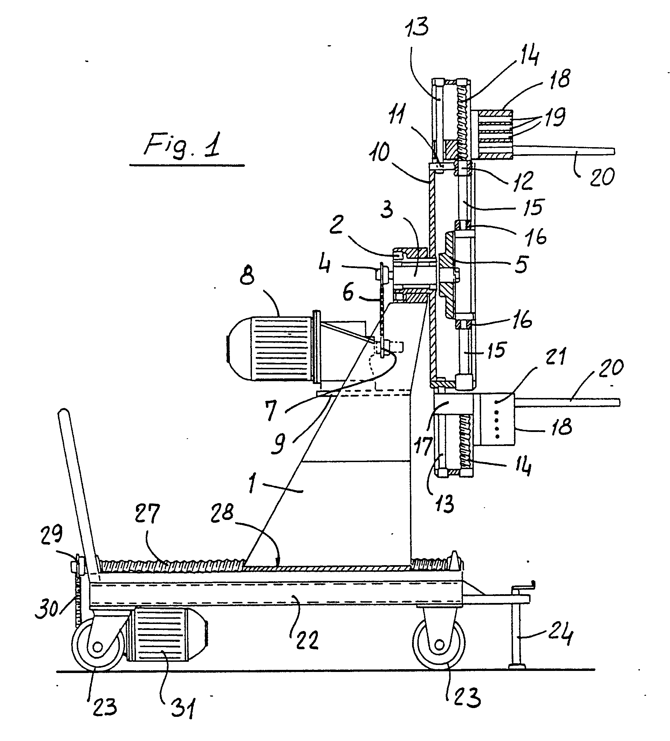

Fig. 1 is a partially sectioned side view of the expander device according to the present invention; and

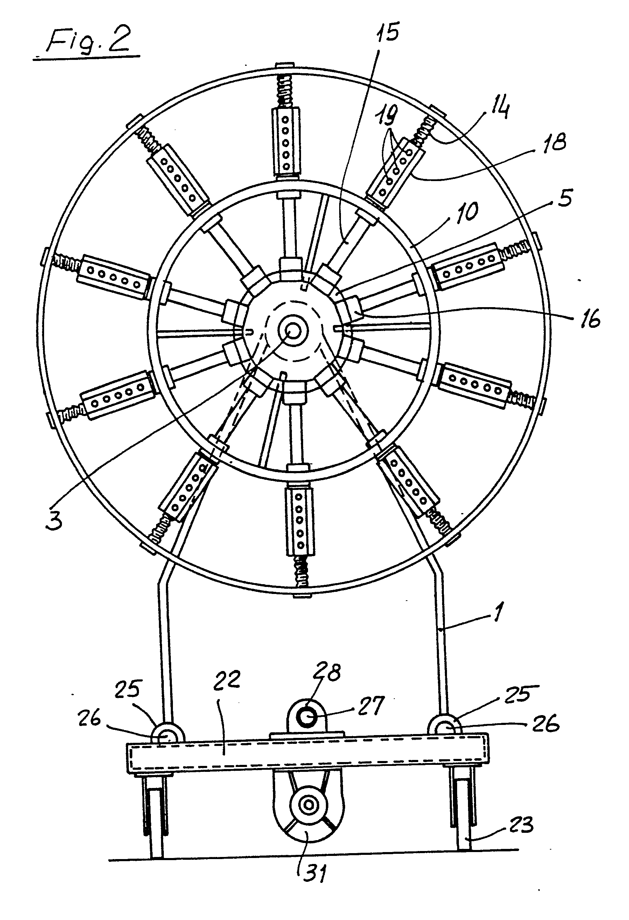

Fig. 2 is a front view of that same expander device.

With reference to the number references of the figures of the accompanying drawings, the expander device according to the present invention comprises a base 1 bearing, at the top whereof and through a supporting member 2, a horizontally extending small shaft 3.

At the two ends of said shaft there are keyed, respectively, a first gear wheel 4 and a second bevel gear wheel 5, which have suitably different diameters.

The mentioned first gear wheel 4 is rotated through a chain 6 or other suitable driving means, by the sprocket 7 which is mounted on the shaft of an electric motor 8, mounted on a horizontal plate 9 rigid with said base 1.

To the supporting frame there is affixed, coaxially to said horizontally extending shaft 3, a cylindrical box-like structure 10, in the side wall thereof there are formed hole pairs 11 and 12 which are arranged along perpendicular lines to the bottom of said structure and evenly spaced from one another.

The inner holes 11 of said hole pair, which are closer to said supporting frame 2, are effective to affix a respective end of corresponding cylindrical small bars or columns 13, whereas the outer holes 12 are effective to support round cross-section bars having a portion whereof extending in parallel and adjoining relationship with respect to said cylindrical columns and provided with a tread, and a smooth portion 15 bearing, at the end thereof, a small bevel gear wheel 16, engaging with the bevel gear wheel 5.

The mentioned cylindrical columns 13 and threaded portions 14 of said cylindrical bars engage, respectively by a prismatic and helicoidal fitting, with a small block 17.

The latter cantilever-wise supports a parallelepipedal body 18, perpendicularly extending with respect to said small block and provided with a plurality of parallely extending counterbores 19.

Within a said counterbore there is inserted a rod 20, of suitable length, which is locked in said counterbore by means of a transversal pin 21.

It should be noted that the use of either counterbores will depend on the diameter of the tread ring to be fitted on the tire.

More specifically, said rod may comprise a plurality of projecting rollers, or it may be designed in other suitable ways to facilitate the disengaging thereof from the lower surface of the new tread ring, as the latter has been glued, at least partially, on the tire carcass.

Advantageously, the base 1 is slidingly mounted on a carriage 22 provided, in addition to the conventional wheels 23, with floor bearing members, consisting of threaded bars 24 helically coupled to said carriage and effective to be operated by means of a handwheel.

More specifically, said base rests, through suitable slides 25, on rectilinear sliding guides 26, and it is driven through a helicoidal screw (27) nut screw (28) coupling.

Said nut screw 28 is rotatively coupled to the two transversal walls of the carriage 22 frame and supports, at one end thereof, a gear wheel 29, which is rotated, through a driving member 30, by means of a sprocket keyed on the shaft of an electric motor indicated at 31.

For retreading, after having mounted the tread ring on the rod 20, the electric motor is operated in such a way as to obtain the desired expansion of said tread ring.

Then, by operating the electric motor 31, the expander device is caused to be displaced along the carriage 22, in such a way as to locate the tread ring about the tire carcass and, by operating again the motor 8, the tread ring is rotated in the opposite direction and released on the tire.

Successively, by rotating in the opposite direction said screw 27, the rods 20 are disengaged from the tread ring.

From the above description and the figures of the accompanying drawings will be self-evident the great functionality and use facility characterizing the expander device for arranging new tread rings on worn tire carcasses according to the present invention.

Obviously the subject expander device has been thereinabove disclosed and illustrated only by way of an indicative but not limitative example and only in order to demonstrate the main characteristics of the present invention.

Thus it will be clear that the invention is susceptible to all of modifications and variations falling within the spirit and scope thereof, as defined in the accompanying claim.

**Claim**

An expander device for arranging new tread rings on worn tire carcasses, comprising a base (1) bearing a horizontally extending shaft (3) and being effective to rotate about the axis of said shaft, at the end of the shaft there being keyed a bevel gear wheel (5) meshing with a plurality of bevel sprockets (16), said bevel sprockets being arranged along a circumferential path and having perpendicular intersecting axes with respect to said bevel gear wheel axis, each of said bevel sprockets being fixed to the end part of a smooth portion of a cylindrical cross-section bar (15) which also has a threaded portion (14) engaging a threaded block (17) having means to fix a rod (20), which block is connected to a structure coaxial to the shaft (3) such that the block can move only in the direction of the common axis of the sprocket and the bar and cannot rotate, the structure bearing holes (12) through which the smooth portion of said bar (15) extends, said horizontally extending shaft (3) being mounted on a support member (2) and carrying, at the two ends thereof, a wheel (4) and said bevel gear wheel (5), said wheel (4) being rotated through a drive member by a wheel (7) mounted on the driving shaft of an electric motor (8), said base (1) being slidably mounted on a support with means to guide and means to move said base (1); characterized in that

(a) the structure (10) in a box-like cylindrical structure having, associated with every hole (12), a second hole (11), said structure being affixed to the frame of the support of said shaft (3),

(b) the connection of the block and structure is by means of a cylindrical column (13) sliding in a second hole of the block (17), one end of the column (13) being fixed in one of the second holes (12) of the structure (10),

(c) the means to fix the rod (20) consist of a parallelepipedal body (18), supported cantileverwise by and perpendicular to the block (17), and is provided with a plurality of counterbores (19), into one of which the rod (20) is inserted and locked therein by a transverse pin (21),

(d) the wheel and drive member being a sprocket and chain respectively;

(e) said base (1) is slidingly mounted on a carriage (22) provided, in addition to the conventionally provided wheels, with floor resting members consisting of threaded bars (24) in threaded holes in said carriage and drivable by a handwheel, said base (1) resting, through suitable slides (25) on rectilinear sliding guides (26) and being driven by means of a helical screw (27)-nut (28) coupling, said nut (28) being rotatably coupled to the two transverse walls of said frame of said carriage (22) and carrying, at one end thereof, a gear wheel (29) effective to be rotated through a second drive member, by a sprocket keyed on the driving shaft of a further electric motor.

**Patentanspruch**

Dehnvorrichtung zum Aufbringen neuer Laufstreifenringe auf den Unterbau von abgenützten Reifen, mit einem Fuß (1), welcher eine sich waagerecht erstreckende Welle (3) trägt und zur Drehung um die Achse dieser Welle geeignet ist, wobei am Ende der Welle ein in eine Vielzahl von Kegelritzeln (16) eingreifendes Kegelzahnrad (5) aufgezogen ist, die Kegelritzel entlang einer umlaufenden Bahn angeordnet sind und miteinander schneidende, zur Achse des Kegelzahnrades senkrechte Achsen haben, und wobei jedes der Kegelritzel mit dem Endteil eines glatten Bereichs eines Stabes (15) mit zylindrischem Querschnitt fest verbunden ist, welcher noch einen in einen Gewindeblock (17) eingreifenden Gewindeteil (14) aufweist, wobei der Gewindeblock Mittel zur Befestigung einer Stange (20) aufweist und mit einer sich koaxial zur Welle (3) erstreckenden Konstruktion verbunden ist, so daß sich der Block nur in der Richtung der gemeinsamen Achse des Ritzels und der Stange bewegen und nicht drehen kann, wobei die Konstruktion Löcher (12) trägt, durch welche sich der glatte Bereich des Stabes (15) erstreckt, die sich waagerecht erstreckende Welle (3) auf einem Tragelement (2) aufgebracht ist und an ihren beiden Enden ein Rad (4) und das genannte Kegelzahnrad (5) trägt, das genannte Rad (4) über ein Antriebselement durch ein auf der Antriebswelle eines Elektromotors (8) aufgebrachtes Zahn (7) gedreht ist, und der Fuß (1) auf einem Halter mit Führungsmitteln und Bewegungsmitteln für den Fuß (1) verschiebbar aufgebracht ist; dadurch gekennzeichnet, daß

(a) die Konstruktion (10) eine schachtelartige zylindrische Konstruktion ist, welche ein zweites, einem jeden Loch (12) zugeordnetes Loch (11) aufweist und mit dem Tragrahmen der Welle (3) fest verbunden ist,

(b) die Verbindung zwischen Block und Konstruktion durch eine zylindrische, in ein zweites Loch des Blockes (17) verschiebbare Säule (13) gebildet ist, wobei ein Ende der Säule (13) in einem der zweiten Löcher (12) der Konstruktion (10) befestigt ist,

(c) die Mittel zur Befestigung der Stange (20) aus einem parallelepipedischen Körper (18) bestehen, welcher fliegend vom Block (17) und senkrecht dazu gehaltert und mit einer Vielzahl von Gegenlöchern (19) versehen ist, wobei in einem der letzteren die Stange (20) eingesetzt und durch einen Querstift (21) befestigt ist,

(d) das Rad und das Antriebselement aus einem Ritzel bzw. einer Kette bestehen,

(e) der Fuß (1) verschiebbar auf einem Wagen (22) aufgebracht ist, welcher außer den üblich vorgesehenen Rädern auch noch mit sich auf dem Boden stützenden Elementen versehen ist, die aus in Gewindelöcher des Wagens eingreifenden und durch ein Handrad betätigbaren Gewindestäben (24) bestehen, wobei der Fuß (1) über geeignete Schieber (25) auf geradlinige Gleitführungen (26) beruht und mittels einer schneckenförmigen Gewinde (27) — Mutter (28) — kopplung angetrieben ist, und die Mutter (28) mit den beiden Schrägwänden des Rahmens des Wagens (22) in Verbindung steht und an einem ihrer Enden ein Zahnrad (29) trägt, welches über ein zweites Antriebselement durch ein auf der Antriebswelle eines weiteren Elektromotors aufgezogenes Ritzel in Drehung gesetzt werden kann.

**Revendication**

Dispositif expanseur pour l'application de bandes de roulement nouvelles sur les carcasses de pneumatiques usagés, comprenant une base (1) supportant un arbre (3) s'étendant horizontalement et apte à tourner sur son axe, en correspondance d'une extrémité dudit arbre on ayant calé une roue dentée conique (5) engrenante avec une pluralité de couronnes coniques (16), lesdites couronnes coniques étant disposées sur un parcours circonférentiel et ayant des axes s'intersectant perpendiculaires par rapport à l'axe de ladite roue dentée conique, chaque dite couronne conique étant fixée à la partie d'extrémité d'une partie lisse d'une barre (15) à section transversale cylindrique laquelle est également pourvue d'une partie taraudée (14) engageant un bloc taraudé (17) ayant des moyens pour fixer une tige (20), ledit bloc étant relié avec une structure coaxiale par rapport audit arbre (3) de telle manière que ledit bloc peut se déplacer seulement dans la direction de l'axe commun de la couronne et de la barre et ne peut tourner pas, la structure ayant des trous (12) traversés par la partie lisse de la barre, ledit arbre horizontal (3) étant monté sur un élément support (2) et supportant, en correspondance des deux extrémités, une roue dentée (4) et ladite couronne conique (5), ladite roue dentée (4) étant mise en rotation, à travers d'un élément d'entrainement, par une roue dentée (7) montée sur l'arbre d'entrainement d'un moteur électrique (8), ladite base (1) étant montée de manière à pouvoir glisser sur un élément support avec des moyens pour guider et moyens pour déplacer ladite base (1); caractérisé en ce que

(a) la structure (10) est une structure à boîte cylindrique ayant, associé avec chaque trou (12), un deuxième trou (11), ladite structure étant attachée au bâti dudit élément support dudit arbre (3),

(b) la connexion dudit bloc et de ladite structure est réalisée au moyen d'une colonne cylindrique (13) glissant dans une deuxième du bloc (17), une extrémité de la colonne (13) étant fixée dans un trou des deuxièmes trous (12) de la structure (10),

(c) les moyens pour fixer la tige (20) sont formés par un corps à parallélépipède (18) supporté d'une manière saillante par ledit bloc et perpendiculaire audit bloc (17), et étant pourvu d'une pluralité de trous borgnes (19), dans un desquels ladite tige (20) est insérée et bloquée par un tourillon transversal (21),

(d) la roue dentée et l'élément d'entrainement étant une couronne et une chaîne respectivement,

(e) ladite base (1) étant montée à glissement sur un chariot (22) pourvu, outre à les roues conventionnelles, d'éléments d'appui sur le plancher formés par des barres taraudées (24) dans des trous taraudés dudit chariot et aptes à être actionnées par un volant, ladite base (1) s'appuyant, à travers des glissières aptes (25) sur des guides de glissement rectilignes (26) et étant actionnée par un ensemble à vis hélicoïdale 27-écrou 28, ledit écrou (28) étant relié de manière à pouvoir tourner à les deux parois transversales dudit bâti dudit chariot (22) et supportant, en correspondance d'une extrémité, une roue dentée (29) apte à être mise en rotation, à travers d'un deuxième élément d'entrainement, par une couronne calée aur l'arbre d'entrainement d'un autre moteur électrique.

Fig. 1

Fig.2